# EUROPEAN PATENT SPECIFICATION

(11) **EP 3 056 388 B1**
(45) Date of publication and mention of the grant of the patent: **20.12.2017**
(21) Application number: 15155042.3
(22) Date of filing: 13.02.2015
(51) Int. Cl.: B60R 11/00

(54) **MOVEABLE HOLDING DEVICE**
BEWEGLICHE HALTEVORRICHTUNG
DISPOSITIF DE MAINTIEN MOBILE

(43) Date of publication of application: 17.08.2016
(73) Proprietor: Jabil Circuit, Inc., St. Petersburg, Florida 33716 (US)
(72) Inventor: Kovacs, Ernst, 2514 Traiskirchen (AT)
(74) Representative: Schwarz & Partner Patentanwälte OG

(56) References cited:
- EP-A1- 2 712 766
- WO-A1-2014/002379
- DE-A1-102010 005 855
- FR-A1- 2 698 594

## Description

The present invention concerns a moveable holding device for automotive applications, especially in the interior space of a vehicle, comprising a moveable unit, a holder that is attached to the moveable unit, a fixed guiding device and at least one bistable spring that is mounted with a first spring end to the moveable unit and with a second spring end to the fixed guiding device.

Bistability as applied in the design of mechanical systems is more commonly said to be "over centre" - that is, work is done on the mechanical system to move it just past a peak point or position, respectively, at which point the mechanism goes "over centre" to its secondary stable position. The result is a toggle-type action. Work applied to the mechanical system below a threshold sufficient to send it "over center" results in no change to the mechanism's state.

Springs are a common method of achieving a bistable "over centre" action. For example a spring attached to a simple two position ratchet-type mechanism can create a button or plunger that is clicked or toggled between two mechanical states. Many ballpoint and rollerball retractable pens employ this type of bistable mechanism.

Also in automotive applications bistable springs are used in different ways to releasable lock access covers either in a closed or an open position. For example document DE 10 2011 115 562 B4 concerns a holding fixture to secure different objects like keys, portable phones, pens or cups in an automotive setting. The holding mechanism is based on active material that is activated to further enable, cause, or retain a securing engagement between the fixture and one or more objects. In one embodiment the active material comprises bistable springs that are covered by an elastic shape fixing cover. Where holding is desired an object is caused to apply a pressure on the elastic cover. Thus the bistable springs arranged side by side below the elastic cover are crushed to form a concavity according to the individual shape of the object. Disadvantageously the elastic cover itself is not moved by the bistable springs.

In another embodiment as shown in document DE 10 2010 041 741 A1 a lid of a closing compartment in a vehicle, like a glove box or map pocket, can be pivotably rotated around an axis between a closed and an open position by means of a bistable element like a bistable spring. The bistable element keeps the lid in a first bistable closed position as well as in a second bistable open position. Unfavourably this design is not applicable to a cover that opens or closes via longitudinal displacement.
Document WO 2007/059943 A1 refers to a loading compartment covering for a vehicle. An extendable roller-blind device which is drivable in a retraction direction forms a covering section in its extended state. The roller-blind device is mounted on a rotatable mounted roller shaft that is stressed by spring action in direction of rotation of the rolled-up roller blind. In order to permit automated operation here both for opening and for closing the roller blind, it is provided that guide rails which extend in a longitudinal direction and are intended for the longitudinally movable receiving of lateral end pieces of an end of the roller blind are each provided with a slide powered by electricity which can be driven in a longitudinally movable manner, and each slide has an activatable bistable coupling by means of which, in a coupling position of the coupling, the respective end piece of the roller blind can be coupled to the slide and, in a release position of the coupling, can be released from the slide. Concerning the fact that the slide is equipped with an electric drive is a drawback of this realisation as it is costly and high-maintenance.
Another example of a bistable cover assembly is shown in document US 2012/0305583 A1 by means of a printer cover. The bistable cover assembly includes a base, a cover and an exposed spring. The cover is attached to the base at a hinge point. The exposed spring is attached directly between the base and the cover and is pre-tensioned to provide forces to create two stable positions, one at either end of the cover travel. Of disadvantage is that during the assembly process two technicians are required - one to pre-tension and position the spring and another to position and tighten screws to mount the spring. If the spring slips or breaks during the assembly process the spring's pre-tension could potentially cause injuries to the technicians or to surrounding components.

The document DE 10 2010 005855 A1 discloses a movable holding device according to the preamble of claim 1, and the document EP 2 712 766 A1 discloses a further relevant holding device. The aim of the invention is to provide a moveable holding device for automotive applications, especially in the interior space of a vehicle, that can be used to hold electronic equipment and that overcomes the disadvantages known in the state of the art and thus enhances comfort and flexibility in handling. Additionally the invention purposes to provide a cover for automotive applications that opens or closes via longitudinal displacement and that is designed to store electronic equipment safely.
These problems are solved by a moveable holding device according to the preamble of claim 1 with the features of the characterizing part of claim 1. The subjects of the dependent claims concern further advantageous embodiments of the invention.

According to the invention a moveable holding device for automotive applications, especially in the interior space of a vehicle, comprising a moveable unit, a holder that is attached to the moveable unit, a fixed guiding device and at least one bistable spring that is mounted with a first spring end to the moveable unit and with a second spring end to the fixed guiding device, the at least one bistable spring is deflected and pretensioned by moving the moveable unit in longitudinal moving direction in regard to the fixed guiding device from a first stable end position to an unstable mid position which is arranged halfway between the first stable end position and an opposing second stable end position, where further longitudinal displacement in moving direction between the unstable mid position and the opposing second stable end position is spring drive actuated by the at least one pretensioned bistable spring.

Advantageously the moveable unit is spring drive actuated. Thus the moveable holding device can be designed in an economic way without electronic equipment like electronic drives. The at least one pretensioned bistable spring is pretensioned manually by moving the moveable unit in longitudinal moving direction in regard to the fixed guiding device from a first stable end position to an unstable mid position. As soon as the unstable mid position is exceeded the moveable unit is moved spring drive actuated to the respective opposite stable end position. The holder is designed to store electronic equipment such as a control unit to control equipment of the vehicle, a remote control or a mobile device like a mobile phone or a PDA (personal digital assistant), respectively, safely. The fixed guiding device forms a hollow like an open box in which the moveable unit is positioned. Depending on the design of the moveable holding device the fixed guiding device can by way of example be integrated in or attached to an arm rest of a vehicle. Besides that the moveable holding device can also be built into a door panel or a dashboard of a vehicle.

Particularly advantageous at a moveable holding device according to the invention at least a surface section of the moveable unit is covered by a cover. In this embodiment the moveable unit can be easily covered and adapted according to the design of an interior of a vehicle. Thus the moveable holding device with its functional parts can be manufactured in series. The adaption according to individual measurements and/or interior designs can be achieved by selecting the appropriate cover or covers, respectively.

Another appropriate version of the invention concerns a moveable holding device wherein the holder is pivotable attached to the moveable unit and/or the cover. In this embodiment the holder is attached for instance like a flap to the moveable unit or the cover. Advantageously the holder can be unfolded in regard to the moveable unit and thus can be easily adjusted according to the demands of a user.

A further alternative of the invention comprises a moveable holding device wherein the moveable unit is guided in longitudinal moving direction along guide rails that are arranged in the guiding device. In this embodiment of the invention a precise longitudinal displacement of the moveable unit is ensured.

In a further development of the invention the moveable unit is equipped with bearings, preferably with sliding blocks, that glide along the guide rails. Alternatively or in addition to sliding blocks also friction bearings as well as anti-friction bearings can be used to smoothly guide the moveable parts of the moveable holding device in longitudinal moving direction. For example sliding blocks made of plastic can be used that glide on guide rails made of coated sheet metal.

Particularly advantageous is a moveable holding device wherein the holder is designed to releasable fasten a control unit like a remote control or a mobile device.

In another preferred design of the invention the holder of a moveable holding device is fold up in a first stable end position and unfolded in an opposing second stable end position. For example a holder that is pivotable attached to the moveable unit can be unfold like a flap via respective guiding means like a guiding ramp underneath the holder that force the holder to unfold when being moved towards one of the end positions, which is afterwards referred to a parking position. In this unfolded, open position the control unit can be easily taken out of and reinserted into the holder, respectively.

In a further alternative design of the inventive moveable holding device the displacement of the moveable unit in longitudinal moving direction between the stable end positions and/or a folding movement of the holder in regard to the moveable unit is/are damped by at least one damper. For example one or more rotary dampers can be used to damp the longitudinal movement of the moveable unit as well as the folding movement of the flappable holder. Advantageously rotary dampers are maintenance-free and self-contained.

In a further inventive development of a moveable holding device the moveable unit is automatically locked in its stable end positions and is equipped with a holder release device to unlock the moveable unit for displacement in longitudinal moving direction. As a benefit of this embodiment the moveable parts of the moveable holding device are fixed in its stable end positions to enhance comfort of operation. In one of the end positions, the parking position, the control unit can be easily taken out of the fold-out holder as the moveable unit is locked in its end position and can not be moved in longitudinal direction.

In an alternative design of the invention the holder release device comprises two handholds with integrated unlock keys that are arranged to be pressed together to an end position to unlock the moveable unit. Advantageously the unlock keys can be mechanically operated by a thumb and an index finger of a car driver or a car passenger. To release the holder release device two fingers are placed in the handholds and are pressed together to an end position of the unlock keys.

In a further realization of an inventive moveable holding device the holder comprises a locking mechanism with holding hooks and catches that correspondingly mesh with notches of a control unit. In case of an emergency it is ensured that a control unit that is placed within the holder is fastened securely by the locking mechanism. Thus injuries due to electronic devices flying around in the inner space of a vehicle can be avoided.

Usefully in another completion of an inventive moveable holding device hook springs are attached to the holding hooks that keep the holding hooks in a locked position by default. The spring-loaded contact between the notches of the control unit and the catches of the holding hooks prevents any clanging noise between the control unit and the holder. Additionally pogo-pins or similar spring-loaded contacts can be used to store the control unit in the moveable holding device noiseless.

Advantageously at a moveable holding device the locking mechanism is equipped with a control unit release device to unlock the holding hooks and release a fastened control unit. Depending on the version of a moveable holding device the control unit release device can be activated and the holding hooks can be unlocked, respectively, either by mechanical means like a spring that has to be pressed or by electronic means like a sensor key that has to be touched to release the locking mechanism.

To have enough time to comfortably take out the control unit the control unit release device is equipped with a damper that ensures a time delay before the locking mechanism is locked again. If the control unit release device is unlocked by mechanical means for example a locking spring is damped in direction of its backward movement to ensure a certain time delay before the control unit is locked again by the locking mechanism. Besides a control unit release device with a mechanically activated time delay it is also possible to use any electronic switches that can be delayed to guarantee that in a released position the control unit can be taken out in a certain time interval. Due to safety regulations the locking mechanism automatically locks again the control unit after that time interval to prevent unmounted parts within the vehicle.

Another useful realization of a locking mechanism comprises a locking spring that affects the holding hooks and unlocks the holding hooks when being pushed against spring action and is damped in direction of its backward movement into expanded spring position. To have enough time to comfortably take out the control unit the control unit release device is equipped with a damper that ensures a time delay before the locking mechanism is locked again. For example the locking spring is damped in direction of its backward movement.

Further details and advantages of the moveable holding device according to the invention will become more apparent in the following description and the accompanying drawings:
- Figures 1 to 3 each show in a perspective view diagonally from the front a first embodiment of a moveable holding device according to the invention in different positions.
- Figures 4 to 6 each show in a section view from the side details of the moveable holding device as shown in Figures 1 to 3.
- Figures 7 to 10 each show in a perspective view diagonally from the front a second embodiment of a moveable holding device according to the invention in different positions. Fig. 7 to Fig. 9 each refer to a sequence to take out a control unit that is stored in the moveable holding device. Fig. 10 shows the moveable holding device with the control unit already removed.
- Figures 11 to 13 each show in a detail section view from above a locking mechanism how to lock and release an apparatus to be stored in the moveable holding device.
- Figures 14 to 16 each show in a schematic perspective view diagonally from above a movement of a moveable unit and a guiding device coupled by a bistable spring.

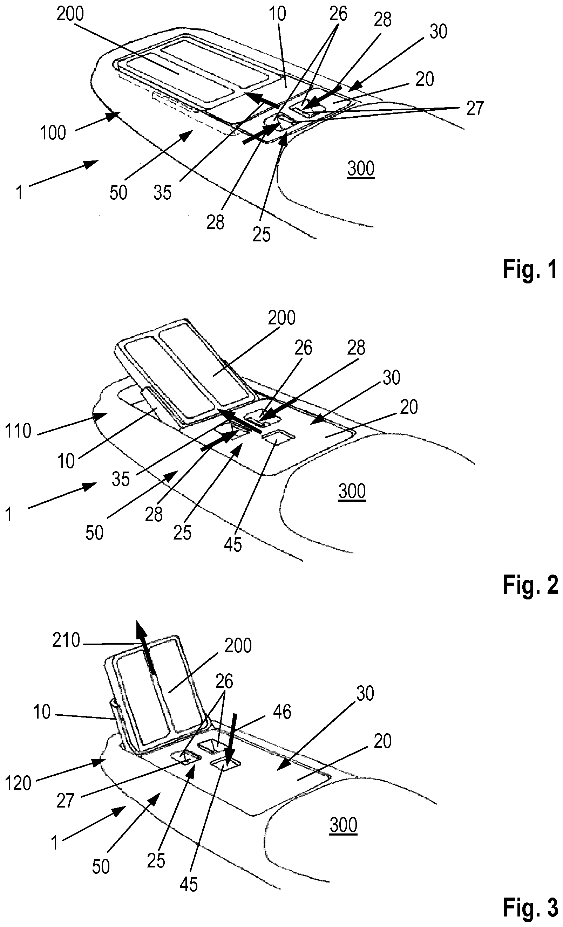

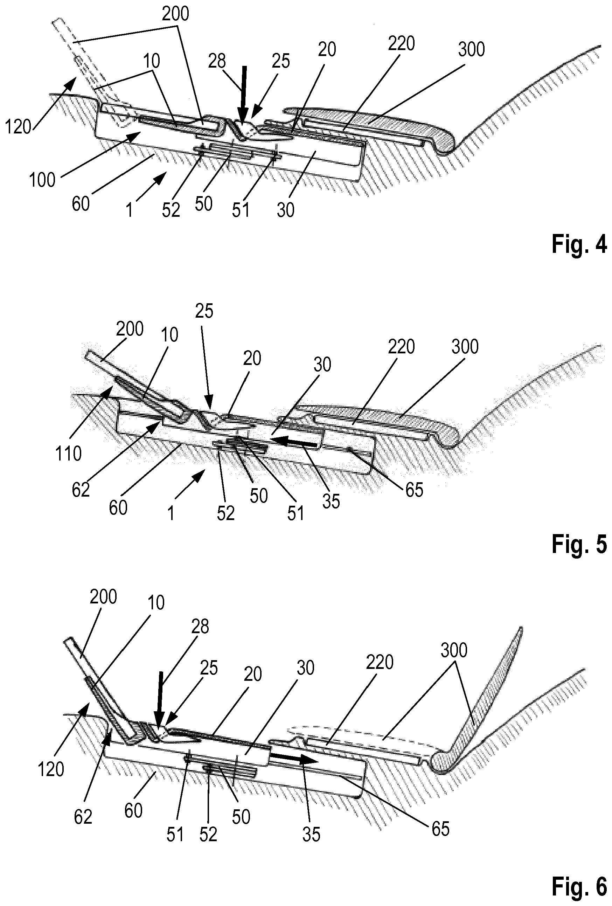

The following description refers to Figures 1 to 3 that show a moveable holding device 1 in different positions. Figures 4 to 6 each show in a section view from the side details of the moveable holding device 1 as illustrated in Figures 1 to 3. The moveable holding device 1 comprises a holder 10 to hold a control unit 200 like a remote control unit and/or a mobile device like a mobile phone or a personal digital assistant (PDA) in an interior space of a vehicle. For example the moveable holding device 1 is integrated in an arm rest 300 like a middle arm rest between the front chairs of a vehicle. Fig. 1 and Fig. 4, respectively, each show the moveable holding device 1 in a first stable end position 100 which is furthermore referred to as sleeping position 100. The holder 10 with the control unit 200 is stored in a secured flat position within the arm rest 300. The moveable holding device 1 further comprises a cover 20 that covers a moveable unit 30 lying beneath that can be moved in longitudinal moving direction 35. The holder 10 is pivotable attached to the moveable unit 30 and the cover 20, respectively.

To open the holder 10 and to optionally take out the stored control unit 200 a holder release device 25 is positioned in the cover 20 which comprises two handholds 26 with integrated unlock keys 27. The unlock keys 27 can be mechanically operated by a thumb and an index finger of a car driver or a car passenger. To release the holder release device 25 two fingers are placed in the handholds 26 and are pressed together to an end position 28 of the unlock keys 27. That end position is indicated by arrows 28. When the holder release device 25 is unlocked the cover 20 as well as the attached moveable unit 30 underneath can be moved via the two handholds 26 in longitudinal direction 35 as indicated by arrow 35. As can be seen in more detail in Figures 4 to 6 a bistable spring 50 is mounted with its first spring end 51 on the moveable unit 30 as well as with its second spring end 52 on a guiding device 60 that is connected with the arm rest 300. The fixed guiding device 60 forms a hollow in which the moveable unit 30 is positioned. In its sleeping position 100 the bistable spring 50 is in a stable, unbent position as can be seen in Fig. 4.
By moving the cover 20 as well as the attached moveable unit 30 underneath in longitudinal direction 35 to an unstable mid position 110 as shown in Fig. 2 and Fig. 5, respectively, also the bistable spring 50 is pretensioned and compressed to an unstable mid position. The holder 10 articulately adjoins to the cover 20 and the moveable unit 30 underneath, respectively. By moving the moveable unit 30 in longitudinal direction 35 from the sleeping position 100 to the mid position 110 unfolds the holder 10 that fastens the control unit 200. As the holder 10 is pivotable attached to the moveable unit 30 a guiding ramp 62 underneath the holder 10 forces the holder 10 to unfold like a flap when being moved towards the parking position 120. In this unfolded, open position the control unit 200 can be taken out of and reinserted into the holder 10, respectively.
Due to the pretensioned bistable spring 50 the further longitudinal displacement in moving direction 35 between the unstable mid position 110 and a second stable end position 120 which is furthermore referred to as parking position 120 is mechanically actuated via spring drive of the bistable spring 50. As soon as the unstable mid position 110 is exceeded the moveable unit 30 is moved spring drive actuated to the respective opposite stable end position which is here the parking position 120. The parking position 120 is illustrated in Fig. 3 and Fig. 6, respectively. As shown in Fig. 6 the bistable spring 50 is also in a second stable end position with its first spring end 51 being opposite of the bistable spring 50 compared to the situation as shown in Fig. 4. In parking position 120 the holder 10 is completely unfold in relation to the arm rest 300. The moveable unit 30 is locked so that the moveable holding device 1 can not be displaced in longitudinal direction 35. As shown in Fig. 3 the control unit 200 can be taken out of the holder 10 by pushing a control unit release device 45 in direction 46 indicated by arrow 46. After having unlocked the control unit via unlock movement 46 the control unit 200 can be taken out of the holder 10 and unloaded in direction 210. This unload position of the control unit 200 is marked with an arrow 210. The unstable mid position 110 of the moveable unit 30 is in longitudinal moving direction 35 halfway between the stable end positions 100 and 120.

As is shown in Fig. 6 the control unit 200 can be easily stowed away safely by reverse succession of the previously described steps. Thus the moving direction 35 is reversed compared to the aforesaid description. Also numeration of the first and second stable end positions has to be reversed as the first, starting position to stow away the control unit 200 is now the parking position 120. While the second stable end position in reversed stow-away mode is the sleeping position 100.

Firstly - if applicable - the control unit 200 has to be reinserted into the unfolded holder 10. Afterwards the holder release device 25 has to be released again by pressing together the unlock keys 27 to an end position 28 with two fingers that are placed in the handholds 26. That end position 28 and the pressing action, respectively, is indicated by arrows 28. When the holder release device 25 is unlocked the cover 20 as well as the attached moveable unit 30 underneath can be moved via the two handholds 26 in reverse longitudinal direction 35 from the stable parking position 120 to the unstable mid position 110. By this movement also the bistable spring 50 is pretensioned and compressed again to an unstable mid position. Due to the pretensioned bistable spring 50 the further longitudinal displacement in moving direction 35 between the unstable mid position 110 and the stable sleeping position 100 is mechanically actuated via spring drive of the bistable spring 50. Additionally Fig. 6 shows that a part of the arm rest 300 can be unfolded between a closed position - indicated as doted line - and an open position. Underneath this foldable cover of the arm rest 300 another second control unit 220 or a respective mobile device like a mobile phone or a PDA can be stored.

Moreover Fig. 4 shows in doted lines also the unfolded holder 10 in its parking position 120. Due to the fact that the parking position 120 is a stable end position of the bistable spring 50 as well as in this design the moveable holding device 1 is locked in its parking position 120 the control unit 200 can either be used within the unfolded holder 10 or taken out of the holder 10 and used as handheld device.

In the section views from the side of Figures 4 to 6 also details of the mechanism for longitudinal displacement of the moveable unit 30 can be seen. To ensure that the moveable unit 30 and the respective cover 20 mounted atop are moved in direction 35 basically in parallel with a top surface of the arm rest 300 there are guide rails 65 provided in the guiding device 60. Corresponding sliding blocks that are in mesh with the guide rails 65 and glide along those guide rails 65 are mounted on the moveable unit 30. Thus it is ensured that the movable unit 30 can be moved in regard to the guiding device 60 smoothly and quietly. Alternatively or in addition to the sliding blocks also friction bearings as well as anti-friction bearings can be used to smoothly guide the moveable parts of the moveable holding device 1 in longitudinal moving direction 35.

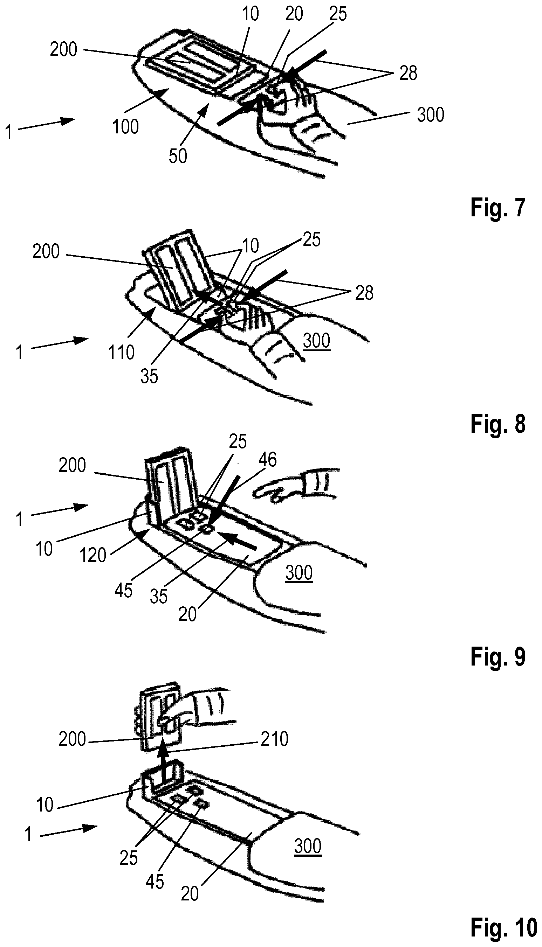

Figures 7 to 10 show in iteration to the aforementioned description the handling of a second embodiment of a moveable holding device 1 according to the invention. Figures 7 to 9 each refer to a sequence to take out a control unit 200 that is stored in the moveable holding device 1. Fig. 7 shows the stowed-away control unit 200 fastened in its holder 10 in a sleeping position 100. Firstly the holder release device 25 is unlocked by pressing together two fingers that are placed in the handholds 26 and that press the unlock keys 27 to an end position 28. Fig. 8 indicates that when the holder release device 25 is unlocked the cover 20 as well as the attached moveable unit 30 underneath can be moved via the two handholds 26 in longitudinal direction 35 from the sleeping position 100 to the unstable mid position 110. By this movement 35 between the sleeping position 100 and the mid position 110 - which is half the way of total longitudinal displacement - the bistable spring 50 is pretensioned and the further movement 35 between the mid position 110 and the parking position 120 is mechanically actuated via spring drive of the bistable spring 50.

To take out the control unit 200 the holder 10 has to be brought to stable parking position 120 - as shown in Fig. 9 - and the control unit release device 45 has to be pushed in direction 46 to release a locking mechanism 40. Afterwards if necessary the control unit 200 can be taken out of the holder 10 in a basically upward direction 210. In this second embodiment of the invention as shown in Figures 7 to 10 the holder 10 unfolds in parking position 120 basically vertical to the arm rest 300.

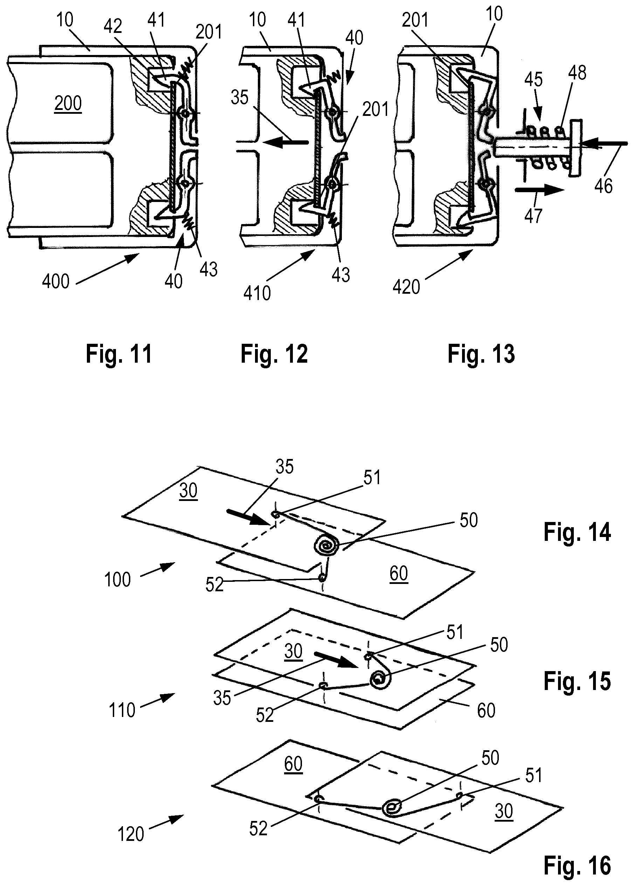

Figures 11 to 13 show in more detail the locking mechanism 40 and how to lock and release an apparatus like a control unit 200 to be stored in the holder 10 of the moveable holding device 1. Fig. 11 shows the locking mechanism 40 in an interlocked position 400. On a narrow side of the control unit 200 there are notches 201 provided. The locking mechanism 40 is integrated in the holder 10 and comprises holding hooks 41 whereby catches 42 arranged on the holding hooks 41 correspondingly mesh with the notches 201 on the control unit 200. The locking mechanism 40 and the holding hooks 41, respectively, are spring-driven. For this purpose hook springs 43 are attached to the holding hooks 41 and ensure that the holding hooks 41 are in a locked position by default. The spring-loaded contact between the notches 201 of the control unit 200 and the catches 42 of the holding hooks 41 prevents any clanging noise between the control unit 200 and the holder 10. Additionally pogo-pins or similar spring-loaded contacts can be used to store the control unit 200 in the moveable holding device 1 noiseless.

Fig. 12 shows the locking mechanism 40 in a crash position 410. When extreme gravitational forces in longitudinal moving direction 35 affect the control unit 200 - as is for example the case during a frontal crash - the holding hooks 41 are further impacted due to the gravitational forces and strongly fasten the control unit 200.

Fig. 13 shows the locking mechanism 40 in a released position 420. To release the locking mechanism 40 the control unit release device 45 has to be pushed in direction 46. In this embodiment the control unit release device 45 comprises a mechanically activated locking spring 48 that can be unlocked by pushing in direction 46. To have enough time to comfortably take out the control unit 200 the control unit release device 45 is equipped with a damper that ensures a time delay before the locking mechanism 40 is locked again. Here the locking spring 48 is damped in direction of its backward movement 47. Besides a control unit release device 45 with a mechanically activated time delay it is also possible to use any electronic switches that can be delayed to guarantee that in a released position 420 the control unit 200 can be taken out in a certain time interval. Due to safety regulations the locking mechanism 40 automatically locks again the control unit 200 after that time interval to prevent unmounted parts within the vehicle.

Figures 14 to 16 each show in a schematic perspective view a movement of a moveable unit 30 in regard to a guiding device 60 that is fixed and part of the arm rest 300. The moveable unit 30 and the guiding device 60 are coupled by a bistable spring 50. The first spring end 51 is mounted to the moveable unit 30 whereas the second spring end 52 is mounted to the guiding device 60. Fig. 14 shows the bistable spring 50 in a first stable end position corresponding to the sleeping position 100. Fig. 15 shows the bistable spring 50 in an unstable middle position corresponding to the mid position 110. Fig. 16 shows the bistable spring 50 in a second stable end position corresponding to the parking position 120.

### List of reference signs:

- 1: moveable holding device
- 10: holder
- 20: cover
- 25: holder release device
- 26: handhold
- 27: end position
- 28: unlock key (arrow)
- 30: moveable unit
- 35: moving direction (arrow)
- 40: locking mechanism
- 41: holding hook
- 42: catch
- 43: hook spring
- 45: control unit release device
- 46: unlock movement (arrow)
- 47: backward movement (arrow)
- 48: locking spring
- 50: bistable spring
- 51: first spring end
- 52: second spring end
- 60: guiding device
- 62: guiding ramp
- 65: guide rail
- 100: stable end position, sleeping position
- 110: unstable mid position
- 120: stable end position, parking position
- 200: control unit / mobile device / PDA (personal digital assistant)
- 201: notch
- 210: unload position of control unit (arrow)
- 220: second control unit / mobile device / PDA (personal digital assistant)
- 300: arm rest
- 400: interlocked position
- 410: crash position
- 420: released position

## Claims

1. Moveable holding device (1) for automotive applications, especially in the interior space of a vehicle, comprising a moveable unit (30), a holder (10) that is attached to the moveable unit (30), a fixed guiding device (60) and at least one bistable spring (50) that is mounted with a first spring end (51) to the moveable unit (30) and with a second spring end (52) to the fixed guiding device (60), **characterized in that** the holder (10) is pivotable attached to the moveable unit (30) and is designed to releasable (210) fasten a control unit (200) and that the at least one bistable spring (50) is deflected and pretensioned by moving the moveable unit (30) in longitudinal moving direction (35) in regard to the fixed guiding device (60) from a first stable end position (100, 120) to an unstable mid position (110) which is arranged halfway between the first stable end position (100, 120) and an opposing second stable end position (120, 100), where further longitudinal displacement in moving direction (35) between the unstable mid position (110) and the opposing second stable end position (120, 100) is spring drive actuated by the at least one pretensioned bistable spring (50).

2. Moveable holding device (1) according to claim 1, wherein at least a surface section of the moveable unit (30) is covered by a cover (20).

3. Moveable holding device (1) according to claim 1 or 2, wherein the holder (10) is pivotable attached to the cover (20).

4. Moveable holding device (1) according to any of claims 1 to 3, wherein the moveable unit (30) is guided in longitudinal moving direction (35) along guide rails (65) that are arranged in the guiding device (60).

5. Moveable holding device (1) according to claim 4, wherein the moveable unit (30) is equipped with bearings, preferably with sliding blocks, that glide along the guide rails (65).

6. Moveable holding device (1) according to any of claims 1 to 5, wherein the holder (10) is fold up in a first stable end position (100) and unfolded in an opposing second stable end position (120).

7. Moveable holding device (1) according to any of claims 1 to 6, wherein the displacement of the moveable unit (30) in longitudinal moving direction (35) between the stable end positions (100, 120) and/or a folding movement of the holder (10) in regard to the moveable unit (30) is/are damped by at least one damper.

8. Moveable holding device (1) according to any of claims 1 to 7, wherein the moveable unit (30) is automatically locked in its stable end positions (100, 120) and is equipped with a holder release device (25) to unlock (28) the moveable unit (30) for displacement in longitudinal moving direction (35).

9. Moveable holding device (1) according to claim 8, wherein the holder release device (25) comprises two handholds (26) with integrated unlock keys (27) that are arranged to be pressed together to an end position to unlock (28) the moveable unit (30).

10. Moveable holding device (1) according to any of claims 1 to 9, wherein the holder (10) comprises a locking mechanism (40) with holding hooks (41) and catches (42) that correspondingly mesh with notches (201) of a control unit (200).

11. Moveable holding device (1) according to claim 10, wherein hook springs (43) are attached to the holding hooks (41) that keep the holding hooks (41) in a locked position (400, 410) by default.

12. Moveable holding device (1) according to claim 10 or 11, wherein the locking mechanism (40) is equipped with a control unit release device (45) to unlock (46) the holding hooks (41) and release a fastened control unit (200).

13. Moveable holding device (1) according to claim 12, wherein the locking mechanism (40) comprises a locking spring (48) that affects the holding hooks (41) and unlocks the holding hooks (41) when being pushed (46) against spring action and is damped in direction of its backward movement (47) into expanded spring position.

## Patentansprüche

1. Bewegliche Haltevorrichtung (1) für Automobil-Anwendungen, insbesondere im Innenraum eines Fahrzeugs, umfassend eine bewegliche Einheit (30), einen an der beweglichen Einheit (30) angebrachten Halter (10), eine feststehende Führungseinrichtung (60) und mindestens eine bistabile Feder (50), die mit einem ersten Federende (51) an der beweglichen Einheit (30) und mit einem zweiten Federende (52) an der feststehenden Führungseinrichtung (60) gelagert ist, **dadurch gekennzeichnet, dass** der Halter (10) an der beweglichen Einheit (30) schwenkbar angebracht ist und dazu ausgebildet ist, eine Steuereinheit (200) lösbar (210) zu befestigen, und dass die mindestens eine bistabile Feder (50) ausgelenkt und vorgespannt wird, indem die bewegliche Einheit (30) in einer längsgerichteten Bewegungsrichtung (35) in Bezug auf die feststehende Führungseinrichtung (60) aus einer ersten stabilen Endposition (100, 120) in eine instabile Mittelposition (110) bewegt wird, die auf halbem Weg zwischen der ersten stabilen Endposition (100, 120) und einer entgegengesetzten zweiten stabilen Endposition (120, 100) angeordnet ist, wobei eine weitere Längsverschiebung in der Bewegungsrichtung (35) zwischen der instabilen Mittelposition (110) und der entgegengesetzten zweiten stabilen Endposition (120, 100) durch die mindestens eine vorgespannte bistabile Feder (50) mittels Federantrieb ausgelöst wird.

2. Bewegliche Haltevorrichtung (1) gemäß Anspruch 1, wobei mindestens ein Oberflächenabschnitt der beweglichen Einheit (30) durch eine Abdeckung (20) bedeckt ist.

3. Bewegliche Haltevorrichtung (1) gemäß Anspruch 1 oder 2, wobei der Halter (10) an der Abdeckung (20) schwenkbar angebracht ist.

4. Bewegliche Haltevorrichtung (1) gemäß einem der Ansprüche 1 bis 3, wobei die bewegliche Einheit (30) in einer längsgerichteten Bewegungsrichtung (35) entlang Führungsschienen (65), die in der Führungseinrichtung (60) angeordnet sind, geführt wird.

5. Bewegliche Haltevorrichtung (1) gemäß Anspruch 4, wobei die bewegliche Einheit (30) mit Lagern ausgestattet ist, vorzugsweise mit Gleitstücken, die entlang der Führungsschienen (65) gleiten.

6. Bewegliche Haltevorrichtung (1) gemäß einem der Ansprüche 1 bis 5, wobei der Halter (10) in einer ersten stabilen Endposition (100) hochgeklappt und in einer entgegengesetzten zweiten stabilen Endposition (120) aufgeklappt ist.

7. Bewegliche Haltevorrichtung (1) gemäß einem der Ansprüche 1 bis 6, wobei die Verschiebung der beweglichen Einheit (30) in einer längsgerichteten Bewegungsrichtung (35) zwischen den stabilen Endpositionen (100, 120) und/oder eine Klappbewegung des Halters (10) in Bezug auf die bewegliche Einheit (30) durch mindestens einen Dämpfer abgeschwächt wird/werden.

8. Bewegliche Haltevorrichtung (1) gemäß einem der Ansprüche 1 bis 7, wobei die bewegliche Einheit (30) in ihren stabilen Endpositionen (100, 120) automatisch arretiert ist und mit einer Halterfreigabevorrichtung (25) zum Entriegeln (28) der beweglichen Einheit (30) für die Verschiebung in einer längsgerichteten Bewegungsrichtung (35) ausgestattet ist.

9. Bewegliche Haltevorrichtung (1) gemäß Anspruch 8, wobei die Halterfreigabevorrichtung (25) zwei Griffe (26) mit integrierten Entriegelungstasten (27) umfasst, die so angeordnet sind, um zur Entriegelung (28) der beweglichen Einheit (30) in eine Endposition aneinandergepresst zu werden.

10. Bewegliche Haltevorrichtung (1) gemäß einem der Ansprüche 1 bis 9, wobei der Halter (10) einen Verriegelungsmechanismus (40) mit Haltehaken (41) und Rastungen (42) aufweist, die entsprechend mit Einkerbungen (201) einer Steuereinheit (200) in Eingriff kommen.

11. Bewegliche Haltevorrichtung (1) gemäß Anspruch 10, wobei an den Haltehaken (41) Hakenfedern (43) angebracht sind, welche die Haltehaken (41) standardmäßig in einer verriegelten Position (400, 410) halten.

12. Bewegliche Haltevorrichtung (1) gemäß Anspruch 10 oder 11, wobei der Verriegelungsmechanismus (40) mit einer Steuereinheit-Freigabevorrichtung (45) zum Entriegeln (46) der Haltehaken (41) und Freigeben einer befestigten Steuereinheit (200) ausgestattet ist.

13. Bewegliche Haltevorrichtung (1) gemäß Anspruch 12, wobei der Verriegelungsmechanismus (40) eine Sicherungsfeder (48) umfasst, welche die Haltehaken (41) beeinflusst und die Haltehaken (41) entriegelt, wenn sie gegen die Federwirkung gedrückt wird (46), und in Richtung ihrer Rückwärtsbewegung (47) in eine expandierte Federposition abgedämpft wird.

## Revendications

1. Dispositif de maintien mobile (1) destiné à des applications automobiles, particulièrement dans l'espace intérieur d'un véhicule, comprenant une unité mobile (30), un support (10) attaché à l'unité mobile (30), un dispositif de guidage fixe (60) et au moins un ressort bistable (50) dont une première extrémité de ressort (51) est montée sur l'unité mobile (30) et dont une seconde extrémité de ressort (52) est montée sur le dispositif de guidage fixe (60), **caractérisé en ce que** le support (10) est attaché pivotant à l'unité mobile (30) et est conçu pour fixer de façon libérable (210) une unité de commande (200) et **en ce que** l'au moins un ressort bistable (50) est fléchi et prétendu par un déplacement de l'unité mobile (30) dans un sens de déplacement longitudinal (35) en regard du dispositif de guidage fixe (60) d'une première position de fin de course stable (100, 120) à une position intermédiaire instable (110) qui se trouve à mi-chemin entre la première position de fin de course stable (100, 120) et une seconde position de fin de course stable opposée (120, 100), dans lequel un déplacement longitudinal plus avant dans le sens de déplacement (35) entre la position intermédiaire instable (110) et la seconde position de fin de course stable opposée (120, 100) est entraîné par ressort actionné par l'au moins un ressort bistable prétendu (50).

2. Dispositif de maintien mobile (1) selon la revendication 1, dans lequel au moins une section de surface de l'unité mobile (30) est couverte par un couvercle (20).

3. Dispositif de maintien mobile (1) selon la revendication 1 ou 2, dans lequel le support (10) est fixé pivotant au couvercle (20).

4. Dispositif de maintien mobile (1) selon l'une quelconque des revendications 1 à 3, dans lequel l'unité mobile (30) est guidée dans le sens de déplacement longitudinal (35) le long de rails de guidage (65) qui sont disposés dans le dispositif de guidage (60).

5. Dispositif de maintien mobile (1) selon la revendication 4, dans lequel l'unité mobile (30) est équipée de paliers, de préférence de blocs de glissement, qui glissent le long des rails de guidage (65).

6. Dispositif de maintien mobile (1) selon l'une quelconque des revendications 1 à 5, dans lequel le support (10) est plié dans une première position de fin de course stable (100) et est déplié dans une seconde position de fin de course stable opposée (120).

7. Dispositif de maintien mobile (1) selon l'une quelconque des revendications 1 à 6, dans lequel le déplacement de l'unité mobile (30) dans le sens de déplacement longitudinal (35) entre les positions d'extrémité stables (100, 120) et/ou un déplacement de repli du support (10) en regard de l'unité mobile (30) sont amortis par au moins un amortisseur.

8. Dispositif de maintien mobile (1) selon l'une quelconque des revendications 1 à 7, dans lequel l'unité mobile (30) est verrouillée automatiquement dans ses positions d'extrémité stables (100, 120) et est équipée d'un dispositif de libération (25) de support permettant de déverrouiller (28) l'unité mobile (30) à des fins de déplacement dans le sens de déplacement longitudinal (35).

9. Dispositif de maintien mobile (1) selon la revendication 8, dans lequel le dispositif de libération (25) de support comprend deux poignées (26) à clavettes de déverrouillage intégrées (27) conçues de façon à faire l'objet d'une pression conjointe jusqu'à une position finale permettant de déverrouiller (28) l'unité mobile (30) .

10. Dispositif de maintien mobile (1) selon l'une quelconque des revendications 1 à 9, dans lequel le support (10) comprend un mécanisme de verrouillage (40) doté de crochets de maintien (41) et de cliquets (42) qui viennent en prise avec des encoches (201) d'une unité de commande (200) .

11. Dispositif de maintien mobile (1) selon la revendication 10, dans lequel des ressorts (43) de crochets sont fixés aux crochets de maintien (41), lesquels maintiennent par défaut les crochets de maintien (41) dans une position verrouillée (400, 410).

12. Dispositif de maintien mobile (1) selon la revendication 10 ou 11, dans lequel le mécanisme de verrouillage (40) est équipé d'un dispositif de libération (45) d'unité de commande permettant de déverrouiller (46) les crochets de maintien (41) et de libérer une unité de commande fixée (200).

13. Dispositif de maintien mobile (1) selon la revendication 12, dans lequel le mécanisme de verrouillage (40) comprend un ressort de verrouillage (48) qui agit sur les crochets de maintien (41) et déverrouille les crochets de maintien (41) lorsqu'ils sont poussés (46) contre l'action de ressort et qui est amorti dans le sens de son déplacement vers l'arrière (47) dans une position de ressort déployé.
